# FASCICULE DE BREVET EUROPEEN

(11) **EP 1 554 427 B1**
(45) Date de publication et mention de la délivrance du brevet: **02.03.2011**
(21) Numéro de dépôt: 03769355.3
(22) Date de dépôt: 08.10.2003
(51) Int. Cl.: D07B 1/06

(54) **CABLES UTILISABLES POUR RENFORCER DES PNEUMATIQUES POIDS-LOURD**
KORDE ZUR VERSTÄRKUNG VON REIFEN FÜR SCHWERFAHRZEUGE
CORDS FOR REINFORCING HEAVY VEHICLE TYRES

(30) Priorité: 11.10.2002 FR 0212701
(43) Date de publication de la demande: 20.07.2005
(73) Titulaire: Société de Technologie Michelin, 63000 Clermont-Ferrand Cedex 09 (FR); Michelin Recherche et Technique S.A., 1763 Granges-Paccot (CH)
(72) Inventeur: DOMINGO, Alain, F-63190 Orleat (FR); BARGUET, Henri, F-63430 Les Martres-d'Artiere (FR); SALLAZ, Gilles, F-63122 Ceyrat (FR)
(74) Mandataire: Ribière, Joel
(86) Numéro de dépôt international: PCT/EP2003/011111
(87) Numéro de publication internationale: WO 2004/033789

(56) Documents cités:
- EP-A- 0 811 786
- WO-A-90/12145
- WO-A-98/41682
- US-A- 4 644 989
- PATENT ABSTRACTS OF JAPAN vol. 008, no. 174 (M-316), 10 août 1984 (1984-08-10) & JP 59 067107 A (SUMITOMO GOMU KOGYO KK), 16 avril 1984 (1984-04-16)

## Description

La présente invention concerne des câbles utilisables pour renforcer des pneumatiques pour véhicules lourds, c'est-à-dire des véhicules industriels capables de porter de lourdes charges, tels que "Poids-lourd" - i.e., métro, bus, engins de transport routier (camions, tracteurs, remorques), véhicules hors-la-route - , engins agricoles ou de génie civil, avions, autres véhicules de transport ou de manutention.

Elle concerne en particulier l'utilisation des tels câbles dans des nappes de protection pour armatures de sommet ou de carcasse, ou dans des raidisseurs de tels pneumatiques. L'invention concerne également des tissus composites utilisables comme nappes de protection ou comme raidisseurs de tels pneumatiques, ainsi que ces pneumatiques eux-mêmes.

Les câbles d'acier pour pneumatiques sont en règle générale constitués de fils en acier perlitique (ou ferrito-perlitique) au carbone, désigné ci-après "acier au carbone", dont la teneur en carbone est généralement comprise entre 0,2 % et 1,2 %, le diamètre de ces fils étant le plus souvent compris entre environ 0,10 et 0,40 mm. On exige de ces fils une très haute résistance à la traction, en général supérieure à 2000 MPa, de préférence supérieure à 2500 MPa, obtenue grâce au durcissement structural intervenant lors de la phase d'écrouissage des fils. Ces fils sont ensuite assemblés sous forme de câbles ou torons, ce qui nécessite des aciers utilisés qu'ils aient aussi une ductilité en torsion suffisante pour supporter les opérations de câblage.

De manière connue, les pneumatiques pour véhicules industriels tels que Poids-lourd comportent usuellement une armature de carcasse qui est ancrée dans deux bourrelets et qui est surmontée radialement par une armature de sommet comportant une ou plusieurs nappes sommet de travail et une ou plusieurs nappes sommet de protection surmontant la ou les nappes sommet de travail, cette armature de sommet étant elle-même surmontée d'une bande de roulement qui est réunie aux bourrelets par deux flancs.

Ces nappes de protection, déformables grâce à une certaine élasticité, ont essentiellement pour fonction de faire obstacle lors du roulage à la pénétration de corps étrangers radialement à l'intérieur de celles-ci.

Pour le renforcement des nappes sommet de protection de pneumatiques pour véhicules industriels tels que Poids-lourd, on utilise généralement aujourd'hui des câbles à torons (*"strand cords"* en anglais) qui sont assemblés par la technique connue de toronnage et qui sont constitués par définition d'une pluralité de torons métalliques enroulés ensemble en hélice, chaque toron comportant des fils d'acier également enroulés ensemble en hélice. On notera que la majorité des fils utilisés dans ces câbles pour nappe sommet de protection présentent un diamètre qui est typiquement supérieur à 0,20 mm, par exemple proche de 0,30 mm, diamètre plus élevé en particulier que celui des fils utilisés dans les câbles pour armature de carcasse de pneumatique Poids-lourd.

A titre de câbles à torons couramment utilisés pour renforcer les nappes sommet de protection des pneumatiques Poids-lourd, on peut par exemple citer un câble de formule (4 x 2), constitué de 4 torons enroulés ensemble en hélice qui sont chacun constitués de 2 fils métalliques enroulés ensemble en hélice.

Les câbles pour nappe sommet de protection sont destinés, d'une part, à conférer une souplesse optimale à la nappe les incorporant pour que cette nappe sommet de protection puisse « épouser » au mieux la forme de l'obstacle sur lequel elle appuie lors du roulage, et, d'autre part, à permettre à cette nappe de s'opposer à la pénétration de corps étrangers radialement à l'intérieur de celle-ci.

On notera également que ces câbles à torons doivent être imprégnés autant que possible par le caoutchouc, de sorte que ce dernier pénètre dans tous les espaces entre les fils constituant les câbles. En effet, si cette pénétration est insuffisante, il se forme alors des canaux vides le long des câbles, et les agents corrosifs, par exemple l'eau, susceptibles de pénétrer dans les pneumatiques par exemple à la suite de coupures ou d'autres agressions de l'armature de sommet du pneumatique, cheminent le long de ces canaux à travers ladite armature. La présence de cette humidité joue un rôle important en provoquant de la corrosion et en accélérant les processus de fatigue (phénomènes dits de "fatigue-corrosion"), par rapport à une utilisation en atmosphère sèche.

D'autre part, chaque bourrelet de pneumatique pour véhicule industriel tel que Poids-lourd est généralement pourvu d'un raidisseur qui est destiné à le renforcer, chaque raidisseur comportant au moins une nappe de câbles s'étendant axialement à l'extérieur du retournement de la nappe de carcasse. Ces câbles font avec la direction circonférentielle de l'enveloppe de pneumatique un angle généralement compris entre 15° et 30°. Dans certains cas, chaque raidisseur peut s'étendre le long du retournement de la nappe de carcasse à la fois axialement à l'extérieur et radialement à l'intérieur de ce retournement en formant sensiblement un L, vu en section méridienne de l'enveloppe.

Ces raidisseurs ont essentiellement une fonction globale d'amortissement qui tend notamment à minimiser le phénomène de « déradialisation » de l'armature de carcasse du pneumatique à chaque écrasement contre le sol de roulage, à reprendre les efforts de compression liés à cet écrasement et à minimiser l'usure au portage sur la jante.

Pour le renforcement des nappes constituant ces raidisseurs, on utilise le plus souvent des câbles d'acier à couches (*"layered cords"* en anglais) constitués d'une âme centrale et d'une ou plusieurs couches concentriques de fils disposées autour de l'âme.

Les câbles à couches les plus répandus dans ces raidisseurs pour pneumatiques Poids-lourd sont des câbles de formule (L+M) ou (L+M+N). Ces câbles sont formés de manière connue d'une âme de L fil(s) entourée d'au moins une couche de M fils éventuellement elle-même entourée d'une couche externe de N fils, avec en général L variant de 1 à 4, M variant de 3 à 12, N variant de 8 à 20 le cas échéant, l'ensemble pouvant être éventuellement fretté par un fil de frette enroulé sur la dernière couche.

A l'instar des câbles pour nappes sommet de protection, il est important que ces câbles à couches de raidisseurs soient imprégnés autant que possible par le caoutchouc, pour que celui-ci pénètre dans tous les espaces entre les fils constituant les câbles et que les agents corrosifs ne cheminent pas dans les canaux vides le long des câbles.

Ont été par exemple décrits des câbles à couches de construction (3+9+15) constitués d'une couche interne de 3 fils entourée d'une couche intermédiaire de 9 fils et d'une couche externe saturée de 15 fils pourvue par exemple d'un fil de frette, comme décrit dans les documents EP-A-176 139 (ou US 4 651 513), EP-A-497 612 (ou US 5 285 836), EP-A-669 421 (ou US 5 595 057), EP-A-709 236 (ou US 5 836 145), EP-A-744 490 (ou US 5 806 296), EP-A-779 390 (ou US 5 802 829).

Un inconvénient majeur de ces câbles de formule (3+9+15) est qu'ils ne sont pas pénétrables à coeur par le caoutchouc, notamment à cause de la structure saturée de la couche externe et de la présence d'un canal ou capillaire au centre des trois fils d'âme, qui reste vide après imprégnation par le caoutchouc et est donc propice à la propagation d'agents corrosifs, tels que l'eau.

Ce document, décrit, des câbles multitorons comportant 2 à 5 torons tordus ensemble selon un pas noté Pc, chacun desdits torons étant formés de 2 à 7 fils d'acier tordus ensemble dans le même sens de torsion selon un pas noté Ps, dans lesquels, entre autres caractéristiques, le diamètre des fils est compris entre 0,03 et 0,40 mm et le ratio Pc/Ps est supérieur à 1. Ils sont destinés à des courroies de transmission et ont donc un diamètre de préférence compris entre 0,03 et 0,20 mm. Leur construction préférentielle consiste en trois torons de trois fils. Tous les exemples de câbles décrits dans ce document concernent des câbles de trois torons de trois fils, ces fils ayant un diamètre unitaire de 0,15 mm ; en outre, dans tous les exemples, le pas d'assemblage Pc des torons n'est jamais inférieur à 8mm.

Le but de la présente invention est de proposer un nouveau câble à torons utilisable notamment pour renforcer une nappe sommet de protection ou encore un raidisseur d'une enveloppe de pneumatique pour véhicule industriel tel que Poids-lourd :
- présentant un encombrement et un coût de fabrication qui sont moindres en comparaison de l'encombrement et du coût des câbles à torons de structure (4 x 2) qui sont connus pour renforcer les nappes sommet de protection de pneumatiques Poids-lourd (en raison du nombre inférieur de torons formant une section de forme triangulaire), tout en conférant aux nappes sommet de protection une résistance à la corrosion du même ordre que celle conférée par lesdits câbles à torons de formule (4 x 2), et
- conférant, d'une part, une endurance améliorée aux bourrelets dont les raidisseurs incorporent ces câbles selon l'invention, en comparaison de celle conférée par des câbles à couches connus pour raidisseurs de structure (3+9+15) et, d'autre part, une résistance à la corrosion également améliorée aux raidisseurs les incorporant (en raison d'une meilleure imprégnation par le caoutchouc), en comparaison de celle conférée par ces câbles à couches de structure (3+9+15).

Ce but est atteint en ce que les demanderesses viennent de découvrir d'une manière surprenante qu'un câble comportant trois torons enroulés ensemble en hélice selon un pas p2 qui sont chacun constitués de deux fils métalliques enroulés ensemble en hélice selon un pas p1, les fils de chaque toron et les torons étant enroulés entre eux dans le même sens de torsion S/S ou Z/Z, les deux fils de chacun des trois torons présentant des diamètres (d1, d2), (d1', d2'), (d1", d2"), respectivement, et ledit câble vérifiant l'ensemble des conditions suivantes :

L'état de la technique est notamment constitué par la demande de brevet EP 0 811 786
(i) 0,25 < d1 <0,45
(ii) 0,25 < d2 < 0,45
(iii) 0,25 < d1' < 0,45
(iv) 0,25 < d2' < 0,45
(v) 0,25 < d1" < 0,45
(vi) 0,25 <d2"< 0,45
(vii) 3 < p1 < p2 < 8.

De préférence, un câble selon l'invention vérifie en outre la condition :
0,5 < p1/p2 < 0,75.

Avantageusement, ledit câble présente un allongement structural As, mesuré en traction selon la norme ISO 6892 de 1984, qui est supérieur à 0,25 %.

Avantageusement, ledit câble présente un allongement à la rupture At, mesuré en traction selon la norme ISO 6892 de 1984, qui est supérieur à 3,3 %.

On notera que cet allongement à la rupture At est défini comme représentant la somme des allongements structural As, élastique Ae et plastique Ap.

Cette valeur élevée de l'allongement à la rupture At des câbles selon l'invention permet essentiellement de conférer à la nappe sommet de protection renforcée par ces câbles, d'une part, un caractère élastique lors de la fabrication du pneumatique et, d'autre part, une rigidité réduite lorsqu'elle est sollicitée en roulage. Cette tension réduite des nappes sommet de protection renforcées par ces câbles se traduit en roulage, lors de sollicitations sévères, par une réduction de la sensibilité de ces nappes à la propagation des entailles et notamment aux dégâts dus à la corrosion.

Avantageusement, ledit câble présente un module d'Young E, mesuré en traction selon la norme ISO 6892 de 1984, inférieur à 125 GPa.

De préférence, un câble selon l'invention présente une masse linéique inférieure ou égale à 5,50 g/m. Egalement à titre préférentiel, un câble selon l'invention présente un diamètre total inférieur ou égal à 1,40 mm.

Les fils métalliques que comportent les torons du câble selon l'invention peuvent être constitués d'acier dont la teneur en carbone varie de 0,2 à 1,2 % et, de préférence, comprise entre 0,5 et 1,0 %.

Un autre but de l'invention est de proposer un tissu composite utilisable notamment comme nappe de protection et/ou comme raidisseur d'une enveloppe de pneumatique pour véhicule industriel tel que Poids-lourd, ledit tissu comportant une composition de caoutchouc à base d'au moins un élastomère diénique qui est renforcée par des éléments de renforcement constitués des câbles selon l'invention susmentionnés.

Par élastomère "diénique", on entend de manière connue un élastomère issu au moins en partie (i.e. un homopolymère ou un copolymère) de monomères diènes c'est-à-dire porteurs de deux doubles liaisons carbone-carbone, conjuguées ou non.

L'élastomère diénique de la composition selon l'invention est de préférence "essentiellement insaturé", c'est-à-dire qu'il comprend un taux molaire d'unités issues de diènes conjugués qui est supérieur à 15% (% en poids). A titre encore plus préférentiel, l'élastomère diénique de ladite composition est dit "fortement insaturé", c'est-à-dire ayant un taux molaire d'unités issues de diènes conjugués supérieur à 50%.

A titre encore plus préférentiel, ledit élastomère diénique appartient au groupe constitué par les polybutadiènes, le caoutchouc naturel, les polyisoprènes de synthèse, les copolymères de butadiène-styrène, les copolymères d'isoprène-butadiène, les copolymères d'isoprène-styrène, les copolymères de butadiène-styrène-isoprène, et les mélanges de ces élastomères.

A titre encore plus préférentiel, ladite composition de caoutchouc est à base de caoutchouc naturel ou de polyisoprène de synthèse.

Mais on peut aussi utiliser, selon un mode de réalisation de l'invention, des coupages de caoutchouc naturel ou de polyisoprène de synthèse avec d'autres élastomères diéniques « fortement insaturés », notamment avec des copolymères de styrène et de butadiène ou avec des polybutadiènes.

Bien entendu, la matrice élastomère d'un tissu composite de l'invention peut contenir un ou plusieurs élastomères diéniques, ce(s) dernier(s) pouvant être utilisé(s) en association avec tout type d'élastomère synthétique non diénique, voire avec des polymères autres que des élastomères, par exemple des polymères thermoplastiques.

Les compositions de caoutchouc des tissus composites conformes à l'invention peuvent comporter également tout ou partie des additifs habituellement utilisés dans la fabrication de pneumatiques, tels que des charges renforçantes comme le noir de carbone et/ou une charge inorganique renforçante telle que la silice, des agents anti-vieillissement, par exemple des antioxydants, des huiles d'extension, des plastifiants ou des agents facilitant la mise en oeuvre des compositions à l'état non réticulé, un système de réticulation à base soit de soufre, soit de donneurs de soufre et/ou de peroxyde, des accélérateurs, des activateurs ou retardateurs de vulcanisation, des accepteurs et donneurs de méthylène, des résines, des systèmes promoteurs d'adhésion connus du type "RFS" (résorcinol-formaldéhyde-silice) ou sels métalliques, tels que sels de cobalt.

Le tissu composite selon l'invention peut se présenter sous des formes variées, par exemple sous la forme d'une nappe, d'une bande, bandelette ou d'un bloc de caoutchouc dans lequel est incorporé le renfort métallique à l'aide de différents moyens connus de l'homme du métier, tels que par exemple des moyens de moulage, de calandrage ou de boudinage.

Dans le tissu composite selon l'invention, les câbles selon l'invention peuvent être disposés parallèlement entre eux, d'une part, selon une densité (notée « d ») de câbles par dm de tissu et, d'autre part, selon une largeur de « pont » de caoutchouc entre deux câbles adjacents (cette largeur ci-après notée « ΔL », exprimée en mm, représente de manière connue la différence entre le pas de calandrage ou pas de pose du câble dans le tissu, et le diamètre dudit câble), d et ΔL étant spécifiquement fixées compte tenu du renforcement spécifique recherché dans la présente invention, i.e. pour le renforcement d'une nappe, de protection et/ou d'un raidisseur.

Dans le tissu composite selon l'invention, la distance entre deux câbles adjacents, d'axe en axe, est de préférence comprise entre 2 et 4 mm. En dessous de la valeur minimale indiquée, le pont de caoutchouc, trop étroit, risque de se dégrader mécaniquement lors du travail de la nappe, notamment au cours des déformations subies dans son propre plan par extension ou cisaillement. Au-delà du maximum indiqué, on s'expose à des risques de perforation entre les câbles.

On notera que le tissu composite selon l'invention est tel que sa densité d de câbles est de préférence comprise entre 20 et 60 câbles par dm de tissu et, à titre encore plus préférentiel, entre 30 et 50 câbles par dm de tissu.

Selon une autre caractéristique de ce tissu composite selon l'invention, la largeur ΔL du pont de composition de caoutchouc entre deux câbles adjacents est de préférence comprise entre 0,5 et 1,3 mm et, à titre encore plus préférentiel, cette largeur ΔL est comprise entre 0,6 et 1,0 mm.

Selon une autre caractéristique de ce tissu composite selon l'invention, dans le cas où ledit tissu est utilisé comme nappe de protection, notamment d'une armature de sommet d'un pneu pour véhicule industriel tel que Poids-lourd, ladite composition de caoutchouc présente, à l'état réticulé et mesuré selon la norme ASTM D 412, un module sécant M 10 compris entre 5 et 12 MPa.

Selon une autre caractéristique de ce tissu composite selon l'invention, dans le cas où ledit tissu est utilisé pour constituer un raidisseur d'un bourrelet de pneumatique pour véhicule industriel tel que Poids-lourd, ladite composition de caoutchouc présente, à l'état réticulé et mesuré selon la norme ASTM D 412, un module sécant M10 compris entre 7 et 15 MPa.

C'est dans ces domaines de modules que l'on a enregistré le meilleur compromis d'endurance des câbles selon l'invention et des tissus composites les incorporant.

Selon un aspect préférentiel de réalisation, une enveloppe de pneumatique pour véhicule industriel tel que Poids-lourd conforme à l'invention comporte une armature de carcasse qui est ancrée dans deux bourrelets et qui est surmontée radialement par une armature de sommet comportant, d'une part, une ou plusieurs nappes sommet de travail et, d'autre part, une ou plusieurs nappes sommet de protection surmontant la ou les nappes sommet de travail, l'armature de sommet étant elle-même surmontée d'une bande de roulement réunie aux bourrelets par deux flancs ; elle est **caractérisée en ce que** l'une au moins desdites nappes sommet de protection comporte un tissu composite selon l'invention tel que défini précédemment.

Selon un autre aspect préférentiel de réalisation, une enveloppe de pneumatique pour véhicule industriel tel que Poids-lourd selon l'invention comporte de manière connue une armature de carcasse qui est ancrée dans deux bourrelets autour de deux tringles en formant respectivement deux retournements axialement à l'extérieur des tringles , chaque bourrelet comportant un raidisseur destiné à le renforcer, chaque raidisseur s'étendant axialement à l'extérieur du retournement d'armature de carcasse et comportant au moins une nappe de câbles métalliques ; elle est **caractérisée en ce que** l'un au moins desdits raidisseurs comporte un tissu composite selon l'invention tel que défini précédemment.

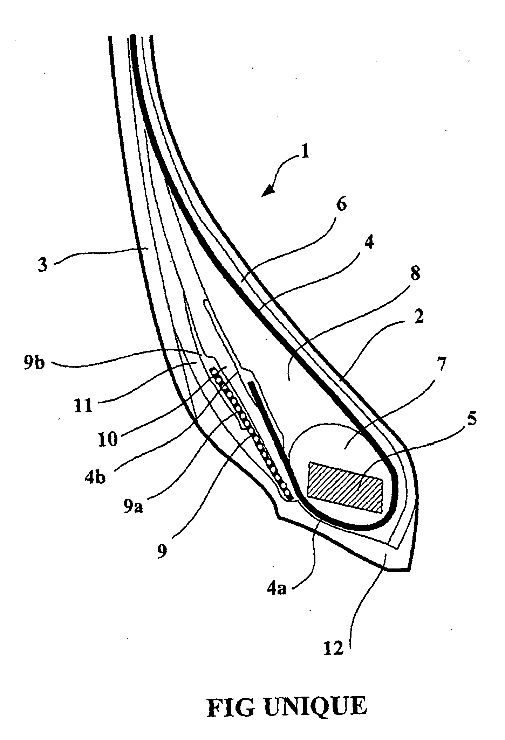

Les caractéristiques précitées de la présente invention, ainsi que d'autres, seront mieux comprises à la lecture de la description suivante de plusieurs exemples de réalisation de l'invention, donnés à titre illustratif et non limitatif, ladite description étant réalisée en référence avec le dessin joint, dans lequel :
la Fig. unique est une vue en section méridienne d'un bourrelet d'un flanc de pneumatique Poids-lourd selon un exemple de réalisation de l'invention.

Est visible à la Fig. unique un bourrelet 1 d'un flanc de pneumatique qui est délimitée axialement à l'intérieur par une couche élastomère d'étanchéité interne 2, prévue étanche au gaz de gonflage, et axialement à l'extérieur par une couche élastomère de flanc externe 3. On comprendra que la présente description de ce bourrelet 1 est applicable à l'identique à l'autre bourrelet du pneumatique.

A la Fig. unique est également visible une nappe de carcasse 4 à câbles métalliques qui est ancrée dans le bourrelet 1 autour d'une tringle métallique 5 en formant un retournement 4a axialement à l'extérieur de celle-ci, lequel retournement 4a se prolonge radialement vers l'extérieur par une bande élastomère de bordure 4b.

Une couche élastomère de renfort 6, prévue entre la nappe de carcasse 4 et la couche d'étanchéité interne 2, est destinée à renforcer cette nappe 4 et cette couche 2 en assurant leur liaison mécanique mutuelle et en protégeant la nappe 4 d'agressions telles que la diffusion du gaz de gonflage.

La tringle 5, de section rectangulaire dans l'exemple de la Fig. unique, est entourée d'une couche élastomère 7 de section sensiblement circulaire qui est destinée à assurer un contact satisfaisant avec la nappe de carcasse 4 autour du retournement 4a.

Le bourrelet 1 comporte également une couche élastomère de remplissage 8 qui est prévue, radialement à l'extérieur de la tringle 5, entre les deux portions de la nappe de carcasse 4 situées de part et d'autre du retournement 4a (on voit dans l'exemple de la Fig. unique que cette couche 8 est en contact avec la nappe de carcasse 4, la bande de bordure 4b et la couche 7 entourant la tringle 5).

Le bourrelet 1 comporte en outre un raidisseur 9 destiné à le renforcer et formé d'une nappe de câbles métalliques 9a selon l'invention qui s'étend axialement à l'extérieur du retournement 4a de la nappe de carcasse 4 et qui font avec la direction circonférentielle du pneumatique un angle de préférence compris entre 15° et 30°. On voit dans l'exemple de la Fig. unique que ce raidisseur 9 se prolonge radialement vers l'extérieur par une bande de bordure 9b.

Entre le raidisseur 9 et le retournement 4a est prévue une couche élastomère 10 destinée à renforcer ce raidisseur 9 et s'étendant axialement au contact de ce dernier, du retournement 4a et de la couche de remplissage 8, dans l'exemple de la Fig. unique.

Entre le raidisseur 9 et la couche de flanc externe 3 est prévue une autre couche élastomère de renforcement 11 qui s'étend, radialement de l'intérieur vers l'extérieur, au contact du raidisseur 9, de la bande de bordure 9b et de la couche 10.

Le bourrelet 1 comporte en outre, dans cet exemple de réalisation, une couche élastomère protectrice 12 qui est destinée à assurer le contact du bourrelet 1 avec la jante de roue et qui délimite ce bourrelet 1 radialement vers l'intérieur en reliant la couche de flanc externe 3 à la couche d'étanchéité interne 2. Comme cela est visible à la Fig. unique, cette couche protectrice 12 s'étend, axialement de l'extérieur vers l'intérieur du bourrelet 1, au contact de la couche de renforcement 11, du raidisseur 9, du retournement 4a, de la couche de renfort 6 et ladite couche 12 recouvre, axialement à l'intérieur, la couche d'étanchéité interne 2 en formant sensiblement un L, vu en section méridienne du pneumatique.

### Exemples de câbles selon l'invention en comparaison de câbles « témoin »:

### 1) Utilisation en nappe sommet de protection d'une enveloppe Poids-lourd :

On va détailler ci-après les caractéristiques mécaniques et d'obtention d'un câble Cᵢ selon l'invention de formule « 6.35 » (trois torons identiques de deux fils chacun, avec un diamètre de fil égal à 0,348 mm) en comparaison de celles d'un câble « témoin » C_{T1} usuellement utilisé en nappe sommet de protection, de formule « 8.35 » (quatre torons identiques de deux fils chacun, avec un diamètre de fil égal à 0,348 mm).

a) Le câble Cᵢ selon l'invention présente un pas p1 de 3,96 mm entre deux fils d'un même toron et un pas p2 de 6,09 mm entre torons. De plus, les fils de chaque toron et les trois torons sont enroulés entre eux dans le même sens de torsion S/S.

Ce câble Cᵢ a été obtenu en deux opérations :
- la réalisation de chaque toron a été effectuée au moyen d'une alimentation tournante, par retordage stabilisé via un retordeur à poulies et sans dressage. On a utilisé pour ce faire une machine « BRD » de type « 96 ».
- l'assemblage des trois torons a également été effectué au moyen d'une alimentation tournante et de la machine précitée, par retordage stabilisé par ledit retordeur à poulies.

b) Le câble C_{T1} « témoin » présente un pas p1 de 3,98 mm entre deux fils d'un même toron et un pas p2 de 8,23 mm entre torons. De plus, les fils de chaque toron et les quatre torons sont enroulés entre eux dans le même sens de torsion S/S.

Le tableau 1 ci-dessous contient les caractéristiques principales de ces deux câbles, les mesures ayant été réalisées sur les câbles pris isolément (i.e. avant leur incorporation dans le tissu composite).

**Tableau 1 :**

| | **Câble C_{T1} « 8.35 »** | **Câble Cᵢ « 6.35 »** |
|---|---|---|
| Force rupture Fm (N) | 1501,0 | 1135,3 |
| Masse linéique (g/m) | 6,258 | 5,062 |
| Diamètre total (mm) | 1,49 | 1,39 |
| Module d'Young E (GPa) | 119 | 103 |
| Allongement structural As (%) | 0,60 | 0,28 |
| Allongement plastique Ap (%) | 1,06 | 1,42 |
| Allongement rupture At (%) | 3,24 | 3,39 |

### 2) Utilisation dans des raidisseurs d'une enveloppe Poids-lourd :

On va comparer ci-après les caractéristiques mécaniques du câble Cᵢ selon l'invention de formule « 6.35 » à celles d'un autre câble « témoin » C_{T2} usuellement utilisé pour renforcer les tissus composites des raidisseurs, de formule « 27.18 FR » (câble à couches (3+9+15) fretté comportant une couche interne C₁ de 3 fils, une couche intermédiaire C₂ de 9 fils, une couche externe saturée C₃ de 15 fils et une frette enroulée sur cette couche externe, avec un diamètre de fil de 0,18 mm).

Ce câble C_{T2} présente, pour les couches C₁ à C₃, des pas p1, p2, p3 respectivement de 6,5 mm, 12,0 mm et 13,0 mm. Le pas d'enroulement de la frette est de 2,8 mm. De plus, ces enroulements de couches C₁ à C₃ et de frette sont caractérisés par les sens de torsion S / S / Z / S.

Le tableau 2 ci-après compare les caractéristiques principales des câbles C_{T2} et Cᵢ, les mesures ayant été également réalisées sur les câbles pris isolément.

**Tableau 2 :**

| | **Câble C_{T2} « 27.18 FR »** | **Câble Cᵢ « 6.35 »** |
|---|---|---|
| Force rupture Fin (N) | 1720,0 | 1135,3 |
| Masse linéique (g/m) | 5,370 | 5,062 |
| Diamètre total (mm) | 1,38 | 1,39 |
| Module d'Young E (GPa) | de 170 à 180 | 103 |
| Allongement structural As (%) | 0 | 0,28 |
| Allongement plastique Ap (%) | 0,60 | 1,42 |
| Allongement rupture At (%) | de 2,1 à 2,6 | 3,39 |

### Essais d'endurance de pneumatiques dont les raidisseurs sont renforcés par les câbles Cᵢ selon l'invention ou par les câbles « témoin » C_{T2} :

On a procédé à des essais de roulage de pneumatiques selon l'invention Pᵢ et de pneumatiques « témoin » P_{T2}, chaque pneumatique testé étant de type Poids-lourd de dimensions « 315/80 R22.5 » et étant gonflé à 8 bars, dans le but de comparer l'endurance des bourrelets des pneumatiques Pᵢ à celle des pneumatiques P_{T2}.

Chaque pneumatique « témoin » P_{T2} comporte notamment :
- dans sa nappe sommet de protection, des câbles à torons connus de formule « 18.23 » (comportant trois torons métalliques constitués chacun de cinq fils enroulés en hélice sur un fil d'âme) qui sont disposés selon un pas entre câbles de 2,5 mm. La densité d de câbles est donc de 40 par dm de tissu et la largeur ΔL de pont de caoutchouc est de 1,04 mm (le diamètre de chaque câble étant de 1,46 mm) ;
- dans ses deux nappes sommet de travail croisées, des câbles à couches non frettés de formule « 11.35 » (11 fils de diamètre proche de 0,35 mm) disposés dans ces nappes suivant un pas de 2,5 mm ;
- dans ses raidisseurs (conformes à la Fig. unique), lesdits câbles à couches « téinoin » C_{T2} de formule « 27.18 FR» qui sont disposés selon un pas entre câbles de 1,8 mm. La densité d de câbles C_{T2} est donc de 55 par dm de tissu et la largeur ΔL de « pont » de caoutchouc est de 0,42 mm.

Chaque pneumatique selon l'invention Pᵢ comporte notamment :
- dans sa nappe sommet de protection, les câbles à torons Cᵢ selon l'invention de formule « 6.35 » qui sont disposés selon un pas entre câbles de 2,25 mm. La densité d de câbles Cᵢ est donc de 44 par dm de tissu et la largeur ΔL de « pont » de caoutchouc est de 0,86 mm (le diamètre de chaque câble Cᵢ étant de 1,39 mm) ;
- dans ses deux nappes sommet de travail croisées, lesdits câbles à couches de formule « 11.35 » disposés suivant un pas entre câbles de 2,5 mm ;
- dans ses raidisseurs (conformes à la Fig. unique), lesdits câbles à torons Cᵢ disposés selon un pas de 2,25 mm, une densité de câbles de 44 par dm de tissu et une largeur ΔL de pont de caoutchouc de 0,86 mm. Le module M10 de la composition de caoutchouc contenue dans ce raidisseur est sensiblement égal à 10 MPa, et cette composition de caoutchouc est à base de caoutchouc naturel.

Les essais de roulage ont été réalisés sous une charge d'environ 5 150 kg sur chaque pneumatique, à une vitesse de roulage de 57 km/h et à une température de 25° C.

Le critère d'arrêt du roulage est la première détection dans le temps, au bout d'un kilométrage critique déterminé, d'une cassure des bourrelets d'un pneumatique.

Le tableau 3 ci-après détaille, en valeur relative, le kilométrage critique moyen obtenu pour des pneumatiques selon l'invention Pᵢ, en prenant comme référence le kilométrage critique moyen obtenu pour des pneumatiques « témoin » P_{T2} qui est exprimé en base 100. Pour ces pneumatiques Pᵢ, le kilométrage critique moyen obtenu est ainsi exprimé en pourcentage du kilométrage correspondant obtenu pour les pneumatiques « témoin » P_{T2}.

**Tableau 3 :**

| | Pneumatiques « témoin » P_{T2} | Pneumatiques de l'invention Pᵢ |
|---|---|---|
| Kilométrage critique moyen (cassure des bourrelets) | 100 | 154 |

Ces essais montrent donc que les raidisseurs comportant les câbles à torons Cᵢ selon l'invention de structure (3 x 2) confèrent une endurance très améliorée aux bourrelets de pneumatique Pᵢ les incorporant, le kilométrage moyen obtenu sans cassure de ces bourrelets étant augmenté de plus de 50% par rapport à celui des pneumatiques « témoin » P_{T2} dont les raidisseurs comportent les câbles à couches C_{T2} de formule (3+9+15).

L'homme du métier comprendra aisément que les exemples précédemment décrits relatifs à l'utilisation de câbles conformes à l'invention dans des nappes sommet de protection ou des raidisseurs de bourrelets de pneumatiques Poids-lourd pourraient être étendus à d'autres types de nappes de protection, par exemple dans des flancs de pneumatiques de génie civil ou de pneus agricoles, ou encore à d'autres types de raidisseurs.

## Revendications

1. Câble à torons comportant trois torons enroulés ensemble en hélice selon un pas p2 qui sont chacun constitués de deux fils métalliques enroulés ensemble en hélice selon un pas p1, les fils de chaque toron et lesdits torons étant enroulés entre eux dans le même sens de torsion S/S ou Z/Z et les deux fils de chacun des trois torons présentant des diamètres (d1, d2), (d1', d2'), (d1", d2"), respectivement, ledit câble satisfaisant à l'ensemble des conditions suivantes, d1, d2, d1', d2', d1", d2", p1 et p2 étant exprimés en mm:
(i) 0,25 < d1 < 0,45
(ii) 0,25 < d2 < 0,45
(iii) 0,25 < d1' < 0,45
(iv) 0,25 < d2' < 0,45
(v) 0,25 < d1" < 0,45
(vi) 0,25 < d2" < 0,45
(vii) 3 < p1 < p2 < 8

2. Câble selon la revendication 1, **caractérisé en ce qu'**il satisfait à la condition : 0,5 < p1/p2 < 0,75.

3. Câble selon une quelconque des revendications 1 ou 2, **caractérisé en ce qu'**il présente une masse linéique inférieure ou égale à 5,50 g/m.

4. Câble selon une quelconque des revendications 1 à 3, **caractérisé en ce qu'**il présente un diamètre total inférieur ou égal à 1,40 mm.

5. Tissu composite comportant une composition de caoutchouc à base d'au moins un élastomère diénique qui est renforcée par des éléments de renforcement, **caractérisé en ce que** lesdits éléments de renforcement sont constitués de câbles selon l'une quelconque des revendications 1 à 4.

6. Tissu composite selon la revendication 5, **caractérisé en ce que** ledit élastomère diénique appartient au groupe constitué par les polybutadiènes, le caoutchouc naturel, les polyisoprènes de synthèse, les copolymères de butadiène-styrène, les copolymères d'isoprène-butadiène, les copolymères d'isoprène-styrène, les copolymères de butadiène-styrène-isoprène, et les mélanges de ces élastomères.

7. Tissu composite selon la revendication 6, **caractérisé en ce que** ladite composition de caoutchouc est à base de caoutchouc naturel.

8. Tissu composite selon une quelconque des revendications 5 à 7, **caractérisé en ce qu'**il comporte lesdits câbles selon une densité de câbles qui est comprise entre 20 et 60 câbles par dm de tissu.

9. Tissu composite selon une quelconque des revendications 5 à 8, **caractérisé en ce que** la largeur ΔL du pont de composition de caoutchouc entre deux câbles adjacents est comprise entre 0,5 et 1,3 mm.

10. Tissu composite selon une quelconque des revendications 5 à 9, ledit tissu étant utilisable comme nappe sommet de protection d'une enveloppe de pneumatique pour véhicule industriel tel que Poids-lourd, **caractérisé en ce que** ladite composition de caoutchouc présente, à l'état réticulé et mesuré selon la norme ASTM D 412, un module sécant M10 compris entre 5 et 12 MPa.

11. Tissu composite selon une quelconque des revendications 5 à 9, ledit tissu étant utilisable pour constituer un raidisseur d'une enveloppe de pneumatique pour véhicule industriel tel que Poids-lourd, **caractérisé en ce que** ladite composition de caoutchouc présente, à l'état réticulé et mesuré selon la norme ASTM D 412, un module sécant M10 compris entre 7 et 15 MPa.

12. Pneumatique pour véhicule industriel comportant une armature de carcasse (4) qui est ancrée dans deux bourrelets (1) et qui est surmontée radialement par une armature de sommet comportant, d'une part une ou plusieurs nappes sommet de travail et, d'autre part une ou plusieurs nappes sommet de protection surmontant ladite ou lesdites nappes sommet de travail, ladite armature de sommet étant elle-même surmontée d'une bande de roulement réunie auxdits bourrelets (1) par deux flancs, **caractérisé en ce que** l'une au moins desdites nappes sommet de protection comporte un tissu composite selon l'une quelconque des revendications 5 à 11.

13. Pneumatique pour véhicule industriel comportant une armature de carcasse (4) qui est ancrée dans deux bourrelets (1) autour de deux tringles (5) en formant respectivement deux retournements (4a) axialement à l'extérieur desdites tringles (5), chaque bourrelet (1) comportant un raidisseur (9) destiné à le renforcer, chaque raidisseur (9) s'étendant axialement à l'extérieur de l'un desdits retournements (4a) d'armature de carcasse (4) et comportant au moins une nappe de câbles métalliques (9a), **caractérisé en ce que** l'un au moins desdits raidisseurs (9) comportent un tissu composite selon l'une quelconque des revendications 5 à 11.

## Claims

1. Strand cable comprising three strands twisted together in helix with pitch p2, each consisting of two metallic wires twisted together in helix with pitch p1, the wires of each strand and the said strands being twisted together in the same twist direction S/S or Z/Z and the two wires of each of the three strands having diameters (d1, d2), (d1', d2'), (d1", d2"), respectively, such that the said cable as a whole satisfies the following conditions, d1, d2, d1', d2', d1", d2", p1 and p2 being expressed in mm:
(i) 0.25 < d1 <0.45
(ii) 0.25 < d2 < 0.45
(iii) 0.25 < d1' < 0.45
(iv) 0.25 < d2' < 0.45
(v) 0.25 < d1" < 0.45
(vi) 0.25 < d2" < 0.45
(vii) 3 < p1 < p2 < 8.

2. Cable according to Claim 1, **characterised in that** it satisfies the condition: 0.5 < p1/p2 < 0.75.

3. Cable according to any of Claims 1 to 3, **characterised in that** it has a mass per unit length lower than or equal to 5.50 g/m.

4. Cable according to any of Claims 1 to 3, **characterised in that** it has an overall diameter smaller than or equal to 1.40 mm.

5. Composite fabric comprising a rubber composition based on at least one diene elastomer which is reinforced by reinforcing elements, **characterised in that** the said reinforcing elements consist of cables according to any of Claims 1 to 4.

6. Composite fabric according to Claim 5, **characterised in that** the said diene elastomer belongs to the group consisting of the polybutadienes, natural rubber, the synthetic polyisoprenes, the copolymers of butadiene-styrene, the copolymers of isoprene-butadiene, the copolymers of isoprene-styrene, the copolymers of butadiene-styreneisoprene, and mixtures of these elastomers.

7. Composite fabric according to Claim 6, **characterised in that** the said rubber composition is based on natural rubber.

8. Composite fabric according to any of Claims 5 to 7, **characterised in that** it comprises the said cables with a cable density d between 20 and 60 cables per dm of fabric.

9. Composite fabric according to any of Claims 5 to 8, **characterised in that** the width ΔL of the bridge of rubber composition between two adjacent cables is between 0.5 and 1.3 mm.

10. Composite fabric according to any of Claims 5 to 9, said fabric being usable as a crown protection ply of a tyre casing for a heavy industrial vehicle, **characterised in that** in the cross-linked condition the said rubber composition has a secant modulus M10 between 5 and 12 MPa, as measured in accordance with the standard ASTM D 412.

11. Composite fabric according to any of Claims 5 to 9, said fabric being usable to form a stiffener in a tyre casing for a heavy industrial vehicle, **characterised in that** in the cross-linked condition the said rubber composition has a secant modulus M10 between 7 and 15 MPa, as measured in accordance with the standard ASTM D 412.

12. Tyre for an industrial vehicle, comprising a carcass reinforcement (4) anchored in two beads (1) and surmounted radially by a crown reinforcement comprising, on the one hand one or more working crown plies, and on the other hand one or more crown protection plies surmounting the said working crown ply or plies, the said crown reinforcement itself being surmounted by a tread connected to the said beads (1) by two sidewalls, **characterised in that** at least one of the said crown protection plies comprises a composite fabric according to any of Claims 5 to 11.

13. Tyre for an industrial vehicle, comprising a carcass reinforcement (4) anchored in two beads (1) around two bead wires (5) by forming respectively two upturns (4a) axially outside the said bead wires (5), each bead (1) comprising a stiffener (9) designed to reinforce it, each stiffener (9) extending axially on the outside of one of the said upturns (4a) of the carcass reinforcement (4) and comprising at least one ply of metallic cables (9a), **characterised in that** at least one of the said stiffeners (9) comprises a composite fabric according to any of Claims 5 to 11.

## Patentansprüche

1. Strangkord, der drei Stränge umfasst, die mit einer Steigung p2 helixförmig zusammengedreht sind, die jeweils aus zwei Metalldrähten bestehen, die mit einer Steigung p1 helixförmig zusammengedreht sind, wobei die Drähte jedes Strangs und die Stränge in der gleichen Drehrichtung S/S oder Z/Z zusammengedreht sind und die beiden Drähte jedes der drei Stränge die Durchmesser (d1, d2), (d1', d2') bzw. (d1", d2") aufweisen, wobei der Kord allen folgenden Bedingungen entspricht, wobei d1, d2, d1', d2', d1", d2", p1 und p2 in mm ausgedrückt sind:
(i) 0,25 < d1 < 0,45
(ii) 0,25 < d2 < 0,45
(iii) 0,25 < d1' < 0,45
(iv) 0,25 < d2' < 0,45
(v) 0,25 < d1" < 0,45
(vi) 0,25 < d2" < 0,45
(vii) 3 < p1 < p2 < 8

2. Kord nach Anspruch 1, **dadurch gekennzeichnet, dass** er der folgenden Bedingung entspricht: 0,5 < p1/p2 < 0,75.

3. Kord nach einem der Ansprüche 1 oder 2, **dadurch gekennzeichnet, dass** er eine Feinheit kleiner oder gleich 5,50 g/m aufweist.

4. Kord nach einem der Ansprüche 1 bis 3, **dadurch gekennzeichnet, dass** er einen Gesamtdurchmesser kleiner oder gleich 1,40 mm aufweist.

5. Verbundgewebe, das eine Kautschukzusammensetzung auf der Basis mindestens eines Dienelastomers umfasst, das mit Verstärkungselementen verstärkt ist, **dadurch gekennzeichnet, dass** die Verstärkungselemente aus Korden nach einem der Ansprüche 1 bis 4 bestehen.

6. Verbundgewebe nach Anspruch 5, **dadurch gekennzeichnet, dass** das Dienelastomer zu der Gruppe bestehend aus Polybutadienen, Naturkautschuk, synthetischen Polyisoprenen, Butadien-Styrol-Copolymeren, Isopren-Butadien-Copolymeren, Isopren-Styrol-Copolymeren, Butadien-Styrol-Isopren-Copolymeren und den Gemischen aus diesen Elastomeren gehört.

7. Verbundgewebe nach Anspruch 6, **dadurch gekennzeichnet, dass** die Kautschukzusammensetzung auf Naturkautschuk basiert.

8. Verbundgewebe nach einem der Ansprüche 5 bis 7, **dadurch gekennzeichnet, dass** es die Korde gemäß einer Korddichte umfasst, die im Bereich zwischen 20 und 60 Korde pro dm Gewebe liegt.

9. Verbundgewebe nach einem der Ansprüche 5 bis 8, **dadurch gekennzeichnet, dass** die Breite ΔL der Brücke aus Kautschukzusammensetzung zwischen zwei benachbarten Korden im Bereich zwischen 0,5 und 1,3 mm liegt.

10. Verbundgewebe nach einem der Ansprüche 5 bis 9, wobei das Gewebe als Schutzgürtellage eines Luftreifenmantels für ein Nutzfahrzeug, wie etwa ein Schwerfahrzeug verwendet werden kann, **dadurch gekennzeichnet, dass** die Kautschukzusammensetzung in vernetztem Zustand und gemessen nach dem Standard ASTM D 412 ein Sekantenmodul M10 im Bereich zwischen 5 und 12 MPa aufweist.

11. Verbundgewebe nach einem der Ansprüche 5 bis 9, wobei das Gewebe verwendet werden kann, um ein Versteifungselement für einen Luftreifenmantel für ein Nutzfahrzeug, wie etwa ein Schwerfahrzeug, zu bilden, **dadurch gekennzeichnet, dass** die Kautschukzusammensetzung in vernetztem Zustand und gemessen nach dem Standard ASTM D 412 ein Sekantenmodul M10 im Bereich zwischen 7 und 15 MPa aufweist.

12. Nutzfahrzeugluftreifen, der eine Karkassenarmierung (4) umfasst, die in zwei Wülste (1) eingezogen ist und über der radial eine Gürtelarmierung liegt, die einerseits eine oder mehrere Arbeitsgürtellagen und andererseits eine oder mehrere Schutzgürtellagen umfasst, die über der oder den Arbeitsgürtellagen liegen, wobei über der Gürtelarmierung selbst eine Lauffläche liegt, die mit den Wülsten (1) durch zwei Flanken verbunden ist, **dadurch gekennzeichnet, dass** mindestens eine der Schutzgürtellagen ein Verbundgewebe nach einem der Ansprüche 5 bis 11 umfasst.

13. Nutzfahrzeugluftreifen, der eine Karkassenarmierung (4) umfasst, die in zwei Wülste (1) um zwei Wulstkerne (5) herum eingezogen ist, indem sie dabei jeweils zwei Umschläge (4a), von den Wulstkernen (5) axial nach außen, bildet, wobei jeder Wulst (1) ein Versteifungselement (9) umfasst, das dazu bestimmt ist, ihn zu verstärken, wobei sich jedes Versteifungselement (9) von einem der Umschläge (4a) der Karkassenarmierung (4) axial nach außen erstreckt und mindestens eine Metallkordlage (9a) umfasst, **dadurch gekennzeichnet, dass** mindestens eines der Versteifungselemente (9) ein Verbundgewebe nach einem der Ansprüche 5 bis 11 umfasst.
